Europäisches Patentamt

European Patent Office

Office européen des brevets

(11) Veröffentlichungsnummer: **0 144 075**
**A2**

## (12) EUROPÄISCHE PATENTANMELDUNG

(21) Anmeldenummer: **84114457.9**

(22) Anmeldetag: **29.11.84**

(51) Int. Cl.⁴: **H 04 Q 11/04**
**H 04 M 11/06**

(30) Priorität: **01.12.83 DE 3343474**

(43) Veröffentlichungstag der Anmeldung:
**12.06.85 Patentblatt 85/24**

(84) Benannte Vertragsstaaten:
**AT BE CH DE FR GB IT LI LU NL SE**

(71) Anmelder: **ANT Nachrichtentechnik GmbH**
**Gerberstrasse 33**
**D-7150 Backnang(DE)**

(72) Erfinder: **Koeck, Klaus, Dipl.-Ing.**
**Dunantstrasse 2**
**D-7150 Backnang(DE)**

(72) Erfinder: **Schomers, Josef, Dipl.-Ing.**
**Villinger Strasse 12**
**D-7150 Backnang(DE)**

(74) Vertreter: **Schickle, Gerhard, Dipl.-Ing.**
**ANT Nachrichtentechnik GmbH Patent- und**
**Lizenzabteilung Gerberstrasse 33**
**D-7150 Backnang(DE)**

(54) Dienstintegriertes, digitales Nachrichtenübertragungssystem.

(57) Die Erfindung betrifft ein dienstintegriertes, digitales Nachrichtenübertragungssystem, in welchem an eine Zentrale (Z) eine Vielzahl von Teilnehmern ($Tln_1...Tln_m$) angeschlossen sind. An die Teilnehmer werden mehrere Breitband-Hauptkanäle und ein Breitband-Zusatzkanal übertragen, indem aus diesen Kanälen in teilnehmerindividuellen Breitband-Multiplexern Breitband-Multiplexsignale gebildet werden. In den Breitband-Hauptkanälen werden Fernsehprogramme ($FS_1...FS_{n-1}$) oder Bildfernsprechsignale ($B_{an}$) übertragen; im Breitband-Zusatzkanal Ton-Rundfunkprogramme und Schmalbandsignale ($SD_{an}$). Die Ton-Rundfunkprogramme werden von einer Antennenanlage (Ant) empfangen und in einer Ton-Aufbereitung (Ton-A) zu einem Ton-Multiplexsignal (ST) aufbereitet. In teilnehmerindividuellen Zusatzkanal-Multiplexern wird aus dem Ton-Multiplexsignal (ST) und den Schmalbandsignalen ($SD_{an}$) der Breitband-Zusatzkanal gebildet.

Jedem Breitband-Multiplexer ist eine Phasenanpassung vorgeschaltet. Diese und weitere Maßnahmen ermöglichen eine wenig aufwendige Ausgestaltung der Breitband-Multiplexer.

Die zur teilnehmerseitigen Demodulation erforderlichen Synchronisiersignale werden im Breitband-Zusatzkanal übertragen und im Zusatzkanal-Multiplexer in diesen eingekoppelt.

./...

FIG.1

Dienstintegriertes, digitales
Nachrichtenübertragungssystem

Die Erfindung betrifft ein dienstintegriertes, digitales
Nachrichtenübertragungssystem nach dem Oberbegriff des
Patentanspruches. Ein solches System ist in der Nachrichtentechnischen Zeitschrift, Bd. 35 (1982) Heft 11
S. 680 bis 684 beschrieben. In diesem System werden verschiedene Breitband- und Schmalbanddienste (Fernsehen,
Rundfunkton, Fernsprechen, Daten) von einer Zentrale an
viele Teilnehmer übertragen. In der Zentrale ist für jeden der vielen Teilnehmer ein eigener Breitband- und ein
eigener Zusatzkanal-Multiplexer notwendig.

Aufgabe der Erfindung ist es, das obige Nachrichtenübertragungssystem in einer Weise auszugestalten, die eine
preiswerte Herstellung und eine leichte Erweiterung erlaubt.

Diese Aufgabe wird durch ein Nachrichtenübertragungssystem
nach dem Patentanspruch gelöst.

Die bitweise Verschachtelung mehrerer Kanäle zu einem
Summenkanal in einem dienstintegrierten, digitalen Nachrichtenübertragungssystem ist an sich aus der deutschen
Offenlegungsschrift 31 44 801 bekannt. Jedoch befaßt sich
diese Schrift mit der Ausgestaltung von bei den Teilnehmern befindlichen Einrichtungen; Anregungen zur Lösung
der der Erfindung zu Grunde liegenden Aufgabe können ihr
nicht entnommen werden.

Durch die Zusammenfassung der Breitband-Koppelpunkte zu
teilnehmerindividuelle Breitband-Koppelfelder wird eine
einfache Verdrahtung der Geräte und eine leichte Erweiterbarkeit erreicht. Es müssen nur so viele Breitband-
Koppelpunkte aufgewendet werden wie wegen der angeschlossenen Zahl der Teilnehmer gerade notwendig sind.

Dadurch, daß das Ton-Multiplexsignal schon an zentraler Stelle, nämlich in der Ton-Aufbereitung, in der Form eines Leerplätze enthaltenden Rahmens aufbereitet wird, können die vielen teilnehmerindividuellen Zusatzkanal-Multiplexer sehr einfach aufgebaut werden, da in ihnen nur noch die Leerplätze mit den Bits für die Synchronisiersignale und für die Schmalbandsignale belegt werden müssen.

Durch die Anwendung der bitweisen Verschachtelung kann der Breitband-Multiplexer sehr einfach ausgeführt werden. Der dazu notwendige Bitflankensynchronismus wird durch die dem Breitband-Multiplexer vorgeschaltete Phasenanpassung in wenig aufwendiger Weise hergestellt. Die Anwendung dieser Phasenanpassung hat noch folgende Vorteile: Die Quellen für die Signale der Breitband- Haupt- und Zusatzkanäle, nämlich die TV-Aufbereitung, das Bildfernsprechkoppelfeld und die Tonaufbereitung brauchen diese Signale nicht mit bestimmten Phasenlagen der Bitflanken abzugeben. Für die Verdrahtung zwischen den Quellen einerseits und den Leitungssätzen andererseits kann eine einfache und billige Technik angewendet werden, da bestimmte und eng tolerierte Laufzeiten nicht eingehalten werden müssen. Dies gilt auch für die Breitband-Koppelpunkte. Jegliche aufwendige Laufzeit-Ausgleichsmaßnahmen sind entbehrlich.

Die Erfindung wird anhand eines in den Figuren 1 bis 3 dargestellten Ausführungsbeispiels erläutert. Die Figur 1 zeigt eine Zentrale Z des Nachrichtenübertragungssystemes. In der Figur 2 ist einer der in der Zentrale vorhandenen Leitungssätze LST ausführlich dargestellt. Anhand der Figur 3 wird eine Funktion des Leitungssatzes erläutert.

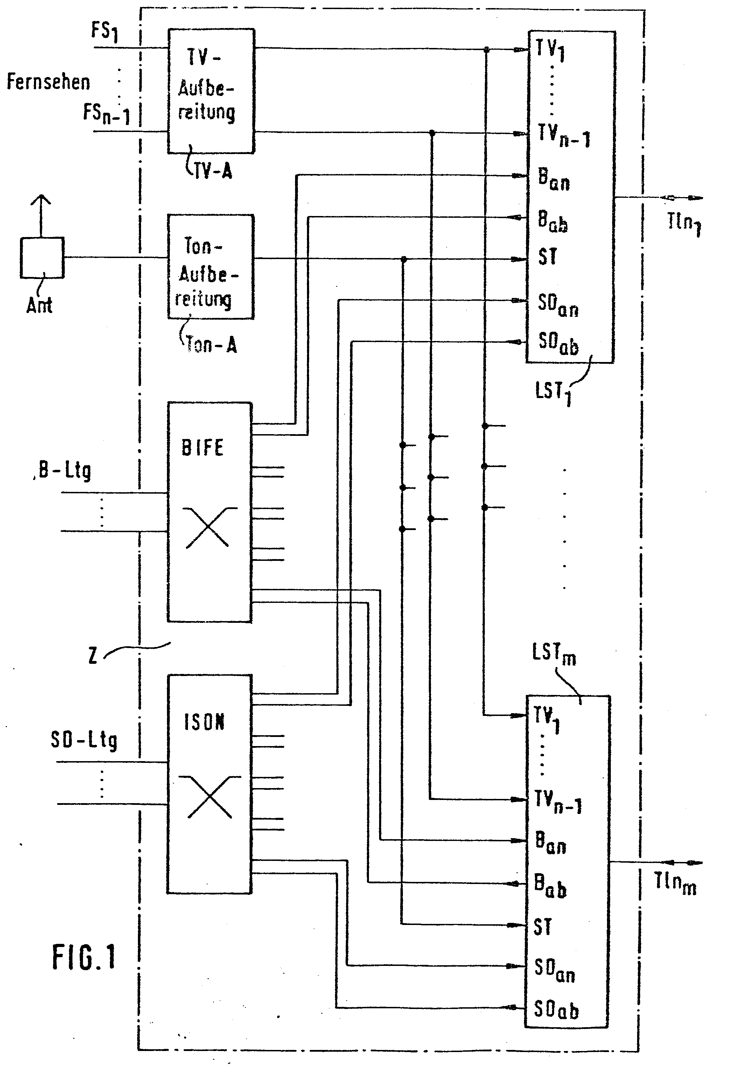

Es wird zunächst die Figur 1 beschrieben. Das Nachrichtenübertragungssystem besteht aus einer Zentrale Z und einer
Vielzahl daran angeschlossener Teilnehmer. Es sind hier
nur die zum ersten ($Tln_1$) und zum letzten Teilnehmer
($Tln_m$) führenden Teilnehmerleitungen gezeichnet. Jede dieser Teilnehmerleitungen führt innerhalb der Zentrale auf
einen dem jeweiligen Teilnehmer zugeordneten Leitungssatz
LST. Es ist hier nur der erste ($LST_1$) und der letzte
($LST_m$) Leitungssatz gezeichnet.

Da den Teilnehmern Fernsehprogramme angeboten werden,
weist die Zentrale mehrere Eingänge $FS_1$ bis $FS_{n-1}$ für
Fernsehprogramme auf. Hier werden die über Kabel übertragenen oder durch örtliche Antennen empfangenen Sendungen der Rundfunkanstalten sowie örtlich produzierte
Darbietungen einer Baugruppe TV-Aufbereitung TV-A zugeführt. In dieser TV-Aufbereitung werden die Fernsehprogramme zu einer gleichen Zahl von digitalen Videosignalen $TV_1$ bis $TV_{n-1}$ mit einer Bitrate von je 34,368 Mbit/s
aufbereitet, welche an alle Leitungssätze $LST_1$ bis $LST_m$
verteilt werden, wobei für jedes Videosignal eine eigene
Leitung vorgesehen ist. So steht an jedem der m Leitungssätze jedes der (n-1) Videosignale zur Verfügung.

Da den Teilnehmern auch mehrere Ton-Rundfunkprogramme angeboten werden, weist die Zentrale Z eine Baugruppe Ton-
Aufbereitung Ton-A auf. Dieser Ton-Aufbereitung werden
von einer Antennenanlage Ant 30 stereofone oder 60 monofone Ton-Rundfunkprogramme zugeleitet. Dort werden sie zu
einem digitalen Ton-Multiplexsignal ST aufbereitet, so
daß zu dessen Verteilung an die Leitungssätze $LST_1$ bis
$LST_m$ eine Leitung genügt. Dieses Ton-Multiplexsignal
weist die gleiche Bitrate wie die digitalen Videosignale
$TV_1$ bis $TV_{n-1}$ auf.

Ferner ist ein Bildfernsprechdienst vorhanden, wozu in
der Zentrale ein Bildfernsprechkoppelfeld BIFE vorgesehen

ist. Über dieses Koppelfeld kann jeder der Teilnehmer $Tln_1$ bis $Tln_m$ zu jedem anderen dieser Teilnehmer eine Bildfernsprechverbindung aufbauen. Aber auch Verbindungen zu den Teilnehmern anderer Zentralen sind über mehrere Bildfernsprech-Fernleitungen B-Ltg möglich. Das Bildfernsprechkoppelfeld BIFE ist über je zwei teilnehmerindividuelle Leitungen $B_{an}$ und $B_{ab}$, für jede Übertragungsrichtung eine, mit den Leitungssätzen LST verbunden, wobei über diese Leitungen digitale Bildfernsprechsignale mit der gleichen Bitrate wie die der digitalen Videosignale $TV_1$ bis $TV_{n-1}$ übertragen werden.

Die an diese Zentrale angeschlossenen Teilnehmer liefern die Bildfernsprechsignale schon mit der oben angegebenen Bitrate. Jedoch können die über eine Bildfernsprech-Fernleitung B-Ltg ankommenden Bildfernsprechsignale eine abweichende Bitrate aufweisen. Für diesen Fall enthält das Bildfernsprechkoppelfeld BIFE Einrichtungen zur Bitratenanpassung.

Ferner ist die Übertragung von Schmalbandsignalen, wie das herkömmliche Fernsprechen sowie Daten vorgesehen. Solche Dienste werden in einem Netz übertragen, für das sich die Bezeichnung "Integrated Services Digital Network", abgekürzt "ISDN", eingebürgert hat. In der Zentrale ist hierfür ein Schmalband-Koppelfeld ISDN vorgesehen, welches über je zwei teilnehmerindividuelle Leitungen $SD_{an}$ und $SD_{ab}$, für jede Übertragungsrichtung eine, mit den Leitungssätzen $LST_1$ bis $LST_m$ verbunden ist. So können die Teilnehmer $Tln_1$ bis $Tln_m$ untereinander Fernsprech- und Datenverbindungen herstellen. Für Verbindungen mit den Teilnehmern anderer Zentralen sind die ISDN-Leitungen SD-Ltg vorgesehen.

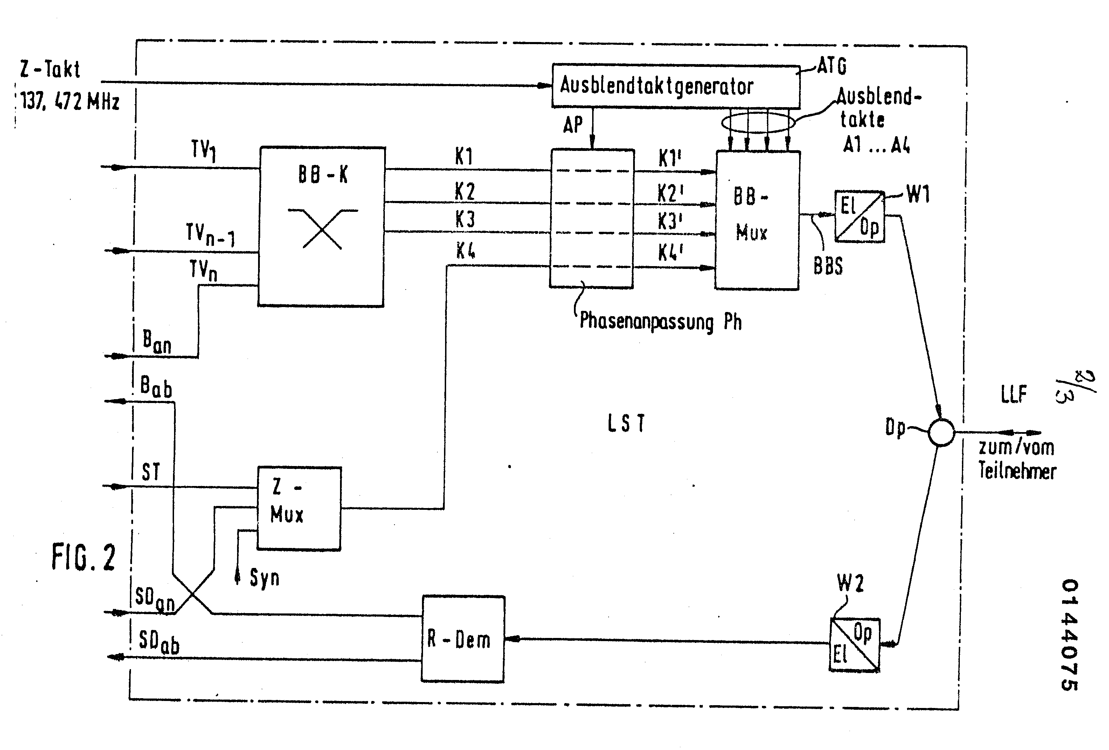

In der Figur 2 ist ein Leitungssatz LST ausführlich dargestellt. Am linken Rand sind die schon in der Figur 1 gezeichneten Leitungen dargestellt. Die Leitungen für die

Videosignale $TV_1$ bis $TV_{n-1}$ sind mit einem Breitband-Koppelfeld BB-K verbunden. Auch die Leitung für das ankommende Bildfernsprechsignal $B_{an}$ ist als Videosignal $TV_n$ mit dem Breitband-Koppelfeld BB-K verbunden. Im Breitband-Koppelfeld kann jedes der z. B. 12 Videosignale $TV_1$ bis $TV_n$ zu einem der Breitband-Hauptkanäle K1 bis K3 durchgeschaltet werden. Weiter ist ein Zusatzkanal-Multiplexer Z-Mux vorgesehen, der das Ton-Multiplexsignal ST, die ankommenden Schmalbandsignale $SD_{an}$ sowie Synchronisiersignale Syn zu einem Breitband-Zusatzkanal K4 zusammenfaßt. Diese vier Breitband-Haupt- und Zusatzkanäle gelangen über eine Baugruppe zur Phasenanpassung Ph als Breitband-Haupt- und Zusatzkanäle K1' bis K4' zu einem Breitband-Multiplexer BB-Mux, wo diese Kanäle zu einem Breitband-Multiplexsignal BBS zusammengefaßt werden.

Dieses Breitband-Multiplexsignal gelangt über einen elektrisch-optischen Wandler W1, über einen Duplexer Dp und über eine Lichtleitfaser LLF zum Teilnehmer. Für die Gegenrichtung ist ein optisch-elektrischer Wandler W2 und ein Rückkanal-Demultiplexer R-Dem vorgesehen. Dieser Rückkanal-Demultiplexer liefert an seinen Ausgängen das abgehende Bildfernsprechsignal $B_{ab}$ und das abgehende Schmalbandsignal $SD_{ab}$.

Zur Versorgung der Phasenanpassung Ph und des Breitband-Multiplexers BB-Mux mit den erforderlichen Takten ist ein Ausblendtaktgenerator ATG vorgesehen, welcher von einem zentralen Taktgenerator Z-Takt mit einem Takt von $4 \times 34,386$ MHz= =137,472 MHz gespeist wird. An den Breitband-Multiplexer BB-Mux liefert der Ausblendtaktgenerator ATG die vier Ausblendtakte A1 bis A4 sowie an die Phasenanpassung Ph den Phasenanpaßtakt AP. Der Ausblendtaktgenerator ATG, die Phasenanpassung Ph und der Breitband-Multiplexer BB-Mux sind nahe beieinander angeordnet und untereinander mit kurzen Leitungen verbunden oder in einem einzigen kundenspezifischen integrierten Schaltkreis verwirklicht.

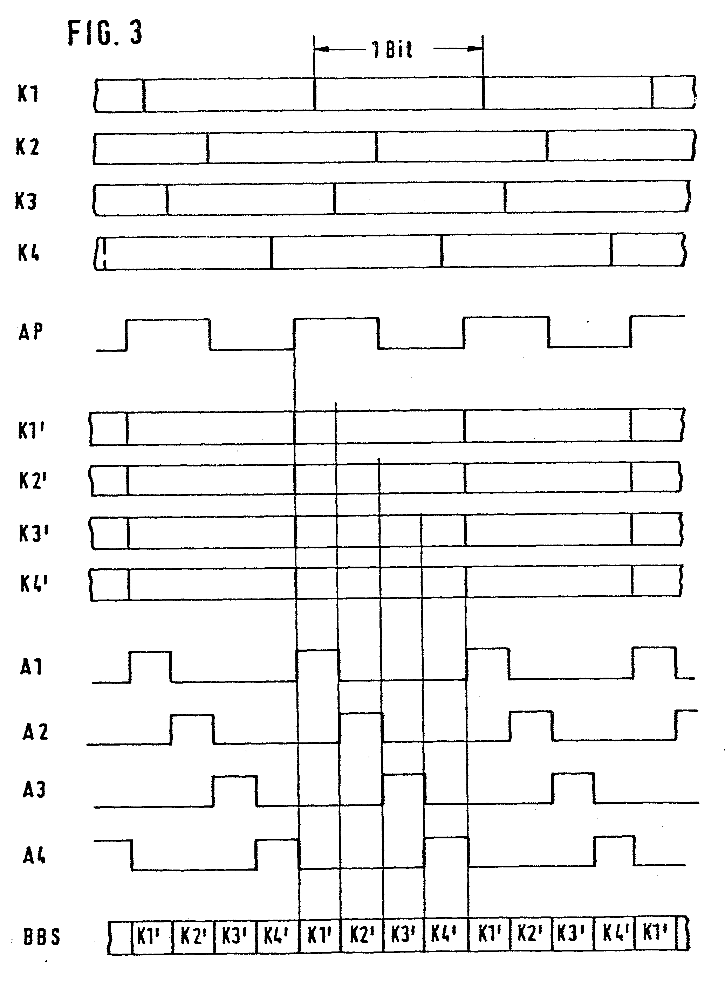

Die Funktion der Phasenanpassung Ph und des Breitband-
Multiplexers BB-Mux wird anhand der Figur 3 erläutert.
In den oberen 4 Zeilen sind die Signale der Breitband-
Haupt- und Zusatz-Kanäle K1 bis K4 dargestellt. Die
Quellen für diese Signale, nämlich die TV-Aufbereitung
TV-A, das Bildfernsprechkoppelfeld BIFE und die Tonaufbereitung Ton-A geben bitratengleiche Signale ab, welche
zueinander unterschiedliche Phasenlagen aufweisen können.
Wegen Laufzeittoleranzen in den Koppelpunkten der Breitband-Koppelfelder BB-K sowie unterschiedliche Laufzeiten
in der Verdrahtung zwischen den oben genannten Quellen
einerseits und den Leitungssätzen $LST_1$ bis $LST_m$ andererseits können die Unterschiede in den Phasenlagen noch
größer werden. So können also die Signale auf den Breitband-Haupt- und Zusatzkanälen K1 bis K4 zueinander beliebige und nicht vorhersehbar unterschiedliche Phasenlagen der Bitflanken aufweisen. So wurde hier eine der
möglichen Phasenlagen durch Einzeichnen der Bitflanken
in der Form von senkrechten Strichen angegeben.

In der nächsten Zeile ist der Phasenanpaßtakt AP dargestellt. Durch seine Steuerung werden in der Phasenanpassung Ph die Signale K1 bis K4 so weit verzögert, bis
ihre Bitflanken mit den positiven Flanken des Phasenanpaßtaktes übereinstimmen. So entstehen am Ausgang der
Phasenanpassung die Signale K1' bis K4', welche in den
6. bis 9. Zeilen dargestellt sind.

In den folgenden Zeilen sind die Ausblendtakte A1 bis
A4 dargestellt. Durch sie wird der Breitband-Multiplexer
BB-Mux so gesteuert, daß er aus den Signalen K1' bis K4'
Stücke herausnimmt und zu dem Breitbandmultiplexsignal
BBS zusammengefaßt, welches in der letzten Zeile dargestellt ist. Hierbei ist der Ausblendtakt A1 dem Signal
K1', der Ausblendtakt A2 dem Signal K2' usw. zugeordnet.
Da die Ausblendtakte zyklisch und in untereinander gleichen Abständen in der Reihenfolge A1-A2-A3-A4-A1 usw.

folgen, treten die den einzelnen Breitband-Haupt- und Zusatzkanälen K1' bis K4' zugeordneten Bits im Breitband-
Multiplexsignal BBS in der selben Reihenfolge und ebenfalls gleichen Abständen auf. Das Breitband-Multiplexsignal BBS wird also durch bitweise Verschachtelung der
Breitband-Haupt- und Zusatzkanäle gebildet. Da hier vier
Kanäle gleicher Bitrate zu einem Breitband-Multiplexsignal zusammengefaßt werden, weist dieses Breitband-Multiplexsignal genau die vierfache Bitrate wie die Breitband-
Haupt- und Zusatzkanäle auf. Irgendwelche Synchronisiersignale werden im Breitband-Multiplexer BB-Mux nicht eingefügt. Zur teilnehmerseitigen Demodulation des Breitband-
Multiplexsignales BBS dienen vielmehr die im Zusatz-Multiplexer Z-Mux in den Breitband-Zusatzkanal K4 eingefügten
Synchronisiersignale Syn.

Bei der digitalen Übertragung von Ton-Rundfunkprogrammen
ist eine Abtastfrequenz von 32 kHz üblich, wobei jeder Abtastwert mit 16 Bit übertragen wird. Daraus ergibt sich
eine Bitrate von 512 kbit/s für einen monofonen Ton-Kanal
oder von 1024 kbit/s für einen stereofonen Ton-Kanal. 30
stereofone Rundfunkprogrammen ergeben also eine Bitrate
von  30,72 Mbit/s. Trotzdem wird für das Ton-Multiplexsignal ein Rahmenaufbau mit der gleichen Bitrate wie die
der digitalen Videosignale, nämlich mit 34,368 Mbit/s vorgesehen. In einem solchen Rahmen sind also noch genügend
Bitplätze frei, welche in den Zusatzkanal-Multiplexern
Z-Mux mit den ankommenden Schmalbandsignalen $SD_{an}$ mit einer Bitrate von 2,048 Mbit/s und Synchronisiersignalen
Syn belegt werden.

- 1 -

Patentanspruch

1. Dienstintegriertes, digitales Nachrichtenübertragungssystem zur Übertragung einer Anzahl bitratengleicher
Breitband-Hauptkanäle (K1...K3, Fig. 2) sowie eines
Breitband-Zusatzkanals (K4, Fig. 2) von einer Zentrale (Z, Fig. 1) an die Teilnehmer (Tln$_1$...Tln$_m$,
Fig. 1), wobei die Zentrale (Z) für jeden Teilnehmer
(Tln$_1$...Tln$_m$) einen Breitband-Multiplexer (BB-Mux,
Fig. 2) aufweist zur Bildung eines Breitbandmultiplexsignals (BBS, Fig. 2) aus den Breitband-Hauptkanälen
(K1...K3) und dem Breitband-Zusatzkanal (K4), wobei
in jedem Breitband-Hauptkanal (K1...K3) ein Videosignal (TV$_1$...TV$_n$, Fig. 2) übertragbar ist, wobei die
Zahl der Videosignale (TV$_1$...TV$_n$) größer ist als die
Zahl der Breitband-Hauptkanäle (K1...K3) und in der
Zentrale (Z) Breitband-Koppelpunkte vorgesehen sind,
welche die ausgewählten Videosignale zu den Breitband-Hauptkanälen (K1...K3) durchschalten, sowie eines der Videosignale (TV$_n$, Fig. 2) ein von einem Bildfernsprechkoppelfeld (BIFE, Fig. 1) abgegebenes Bildfernsprechsignal (B$_{an}$) ist, die übrigen Videosignale
(TV$_1$... TV$_{n-1}$) Fernsehprogramme (FS$_1$...FS$_{n-1}$, Fig. 1)
sind, wobei ferner in der Zentrale (Z) je Teilnehmer
(Tln$_1$...Tln$_m$)

ein Zusatzkanal-Multiplexer (Z-Mux, Fig. 2) vorgesehen ist, welcher aus einem Ton-Multiplexsignal (ST), Schmal-bandsignalen ($SD_{an}$) sowie Synchronisiersignalen (Syn) den Breitband-Zusatzkanal (K4) bildet, wobei das Ton-Multiplexsignal in einer zentralen Ton-Aufbereitung (Ton- A) aus mehreren Ton-Rundfunkprogrammen gebildet wird, dadurch gekennzeichnet, daß in der Zentrale (Z) eine TV-Aufbereitung (TV-A, Fig. 1) vorgesehen ist, welche die Fernsehprogramme ($FS_1...FS_{n-1}$) zu Videosignale $TV_1...TV_{n-1}$) mit der Bitrate der Breitband-Hauptkanäle (K1...K3) aufbereitet, daß das Bildfernsprechkoppelfeld (BIFE) so ausgestaltet ist, damit es den Bildfernsprechkanal bitratengleich mit den Videosignalen abgibt, daß die Breitband-Koppelpunkte zu teilnehmerindividuelle Breitband-Koppelfelder (BB-K, Fig. 2) zusammengefaßt sind, daß die Ton-Aufbereitung (Ton-A) so ausgestaltet ist, damit sie das Ton-Multiplexsignal bitratengleich zu den Videosignalen abgibt mit einem Rahmenaufbau, in welchem Leerplätze zum Einfügen der Synchronisiersignale (Syn) und Schmalbandsignale ($SD_{an}$) durch den Zusatzkanal-Multiplexer (Z-Mux) vorgesehen sind, daß ferner zwischem dem Breitband-Koppelfeld (BB-K) und dem zugehörigen Zusatzkanal-Multiplexer (Z-Mux) einerseits und dem zugehörigen Breitband-Multiplexer (BB-Mux) andererseits eine Phasenanpassung (Ph, Fig. 2 ) eingefügt ist, und daß ferner im Breitband-Multiplexer (BB-Mux) die Breitband-Hauptkanäle (K1'...K3') und der Breitband-Zusatzkanal (K4') bit-weise verschachtelt werden.

FIG.1

FIG. 2

2/3

0144075

0144075

FIG. 3